# EUROPEAN PATENT APPLICATION

(11) **EP 4 325 258 A1**
(43) Date of publication of application: **21.02.2024**
(21) Application number: 23192086.9
(22) Date of filing: 18.08.2023
(51) Int. Cl.: G02B 1/04

(54) **LIQUIDS FOR TUNEABLE OPTICAL DEVICES**

(30) Priority: 19.08.2022 DE 102022121080
(71) Applicant: Optotune Switzerland AG, 8953 Dietikon (CH)
(72) Inventor: NIEDERER, David Andreas, 8953 Dietikon (CH); BRÄNDLE, Andreas, 8953 Dietikon (CH); VIDIELLA DEL BLANCO, Marta, 8953 Dietikon (CH); MADRIGAL, Luis, 8953 Dietikon (CH)
(74) Representative: Schulz Junghans Patentanwälte PartGmbB

(57) **Abstract**

The present invention relates to a liquid for an optical tuneable device, wherein the optical tuneable device comprises a volume and a membrane and wherein the volume is filled with a liquid comprising
• at least one compound of formula (I), 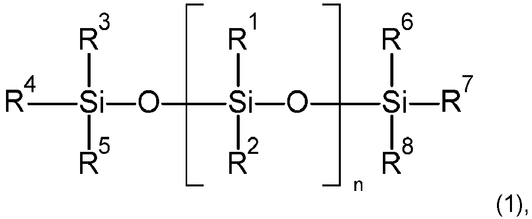 • at least one additive, particularly wherein the at least one additive is selected from the group of a protecting agent, a stabiliser, a tracer, a buffer and/or a surface tension adjustment agent.

## Description

This application claims the right of priority of German Patent Application filed DE 10 2022 121 080.4, incorporated by reference herein.

The present invention relates to a liquid for an optical tuneable device comprising a siloxane-based polymer and at least one additive.

### Background of the Invention

An optical device, such as a tuneable lens, typically comprises a transparent and elastically expandable membrane, an optical element opposing (facing) the membrane and a wall connecting the optical element to the membrane. The membrane, the optical element, and the wall delimit a volume of the lens, which is filled with a liquid.

The focus of the lens can be adjusted by changing the curvature of the membrane. This may for instance be achieved by using an actuator that presses a holding ring against the membrane so as to deform an optically active part of the membrane (US2010202054).

Also known are lens assemblies in which a force is directly exerted on the membrane e.g., by means of a coil (WO2010104904) or by means of a ring-shaped piston that directly indents the membrane in order to deform it (US2011267703).

Alternatively, the optical behaviour of the membrane can be changed by using a wall that is designed to be adjustable in height with respect to the optical element. By amending the height of the wall, the pressure of the fluid residing inside the volume and therewith a curvature of the membrane, and/or the spatial position of the membrane with respect to the optical element is adjusted.

WO 2018/119408 A1 discloses an accommodating intraocular lens for implantation within a capsular bag of a patient's eye. The lens comprises an inner fluid chamber and an outer fluid reservoir filled with a siloxane-based liquid. The fillable volume is delimited by a polymeric material such as poly(methylmethacrylate) (PMMA) copolymer. Water within the lens capsule of the subject may transfer into or out of the inner fluid chambers or the outer fluid reservoir through the polymeric material to achieve an osmotic equilibrium.

Further examples for siloxane-based lens oils suitable for intraocular lens devices are disclosed in WO 2017/205811. A mixture of dimethylsiloxane and diphenylsiloxane having less than about 4 wt.% of any component with a molecular weight less than about 15,000 Daltons was found to result in no swelling of the bulk polymer material when in contact therewith. The bulk polymer material may be composed of a silicone, an acrylic, a plastic or polymeric hydrogel.

Based on the chemical structure and composition, most elastomeric membrane materials suitable for the use in tuneable liquid lenses suffer from effects based on solubility and swellability caused by the liquid filled in the volume.

The present invention aims to expand the spectrum of liquids which are suitable for use in tuneable lenses through the addition of additives. The addition of additives allows for a better protection of the material or a material in contact with the material and improves its chemical and physical properties and the material's durability.

This objective is attained by the subject-matter of the independent claims of the present specification, with further advantageous embodiments described in the dependent claims, examples, figures and general description of this specification.

### Summary of the Invention

A first aspect of the invention relates to a liquid for an optical tuneable device, wherein the optical tuneable device comprises a volume and a membrane and wherein the volume is filled with a liquid comprising
- at least one compound of formula (I), 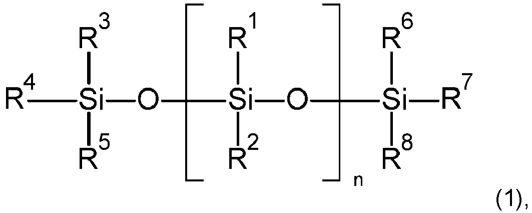 wherein
   each R1 is independently from any other R1 selected from Cx-alkyl-A, particularly each R¹ is selected from Cₓ-alkyl-A, with
      A being selected from -H, CN, phenyl, -(CH₂)-phenyl and CF₃, in particular -H and -CN, and
      x being an integer between 3 and 20,
      each R² is independently from any other R² selected from C_{y}-alkyl, C_{y}-alkyl-B, phenyl, -(CH₂)-phenyl, in particular from any other R² selected from -H, C_{y}-alkyl, phenyl, -(CH₂)-phenyl, with
      B being selected from CN, phenyl, -(CH₂)-phenyl and CF₃, in particular CF₃ and -CN
      y being an integer between 1 and 17, particularly between 1 and 6,
   R³, R⁴, R⁵, R⁶, R⁷ and R⁸ are independently selected from -H, C₁₋₄-alkyl, phenyl, and -(CH₂)-phenyl, particularly methyl,
   n is an integer between 1 and 50,
   the sum of x and y is ≤ 21,
   R¹, R², R³, R⁴, R⁵, R⁶, R⁷ and R⁸ are optionally substituted by one or more substituents -F,
      - at least one additive, particularly wherein the at least one additive is selected from the group of a protecting agent, a stabiliser, a tracer, a buffer and a surface tension adjustment agent,
   and wherein the membrane is selected from an elastomeric membrane or a thermoplastic membrane, in particular from a substituted PDMS or an unsubstituted PDMS membrane, a urethane membrane, an acryl membrane, a polyethylentherephthalate membrane, a polyethylene membrane, a cyclic olefin polymer or a cyclic olefin copolymer membrane, more particularly from a substituted PDMS or an unsubstituted PDMS membrane.

### Terms and definitions

For purposes of interpreting this specification, the following definitions will apply and whenever appropriate, terms used in the singular will also include the plural and vice versa. In the event that any definition set forth below conflicts with any document incorporated herein by reference, the definition set forth shall control.

The terms "comprising," "having," "containing," and "including," and other similar forms, and grammatical equivalents thereof, as used herein, are intended to be equivalent in meaning and to be open ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."

Where a range of values is provided, it is understood that each intervening value, to the tenth of the unit of the lower limit, unless the context clearly dictate otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.

Reference to "about" a value or parameter herein includes (and describes) variations that are directed to that value or parameter per se. For example, description referring to "about X" includes description of "X."

As used herein, including in the appended claims, the singular forms "a," "or," and "the" include plural referents unless the context clearly dictates otherwise.

Unless defined otherwise, all technical and scientific terms used herein have the same meaning as commonly understood by one of ordinary skill in the art.

The term *Cₓ-alkyl or C_{y}-alkyl* in the context of the present specification relates to an alkyl moiety consisting of a certain number (x or y) of C atoms. The alkyl moiety may be linear or branched. For instance, n-butyl, 2-methylpropyl and tert-butyl are examples for x or y being 4.

The term *PDMS* in the context of the present invention relates to polydimethylsiloxane (CAS No. 63148-62-9).

The term *substituted PDMS* in the context of the present invention relates to an at least partially functionalised PDMS by additional substituents such as phenyl or fluoride.

The term *substituted* in its broadest sense relates to an alkyl or phenyl that is substituted in one or several carbon atoms by fluoride F. Non-limiting examples include -CH₂F, -CHF₂, -CF₃, -(CH₂)₂F, -(CHF)₂H, -(CHF)₂F, -C₂F₅, -(CH₂)₃F, -(CHF)₃H, -(CHF)₃F, -C₃F₇, -(CH₂)₄F, -(CHF)₄H, -(CHF)₄F and -C₄F₉. A similar definition applies to a substituted alkyl that is substituted in one or several carbon atoms by with phenyl.

The term *additive* in the context of the present invention relates to a compound or substance which protects the material or a material in contact with the material, e.g. a liquid, including enhancement of the chemical and physical properties of the material and/or improvement of the material's durability. By using more than one additive, several different effects can be taken advantage of.

The term *protecting agent* in the context of the present invention relates to a compound or substance used as an additive, which specifically protects the material it is used on from external factors, including but not limited to corrosion, UV-light dependent degradation, UV-light dependent polymerisation, temperature dependent polymerisation and temperature dependent degradation.

The term *stabiliser* in the context of the present invention relates to a compound or substance used as an additive, which enhances the chemical and physical properties of the material it is being used on, wherein the chemical and physical properties include but are not limited to refractive index, dispersion, transmission, viscosity and oxidation stability at different temperatures.

The term *tracer* in the context of the present invention relates to a compound or substance used as an additive which ensures accurate and facile detection of the optical device claimed in the present invention in case of illegal distribution by third parties.

The term *surface tension adjustment agent* in the context of the present invention relates to a compound or substance used as an additive, which adjusts the surface tension of the liquid in the tuneable optical device allowing for an enhanced coverage of the surface covered by the liquid and for minimalization in adhesion of the liquid to the surface it is covering allowing full operation of the tuneable optical device.

The term *antioxidant* in the context of the present invention relates to a compound or substance which slows or avoids the oxidation of a material, in the case of the present invention the oxidation of the membrane through quenching of radicals developing through external effects, such as UV-light or temperature. The antioxidant in the context of the present invention thus can function as a radical scavenger.

The term *metal deactivator* in the context of the present invention relates to a compound or substance used as an additive which prevents or delays the metal-catalysed oxidation of a polymer. The metal deactivator forms an inactive complex with a catalytically active metal ion, herein from the metal surface of the optical device, and by that decreases the metals' ability to produce radicals from hydroperoxides by oxidation or reduction. Examples for metal deactivators include but are not limited to oxyalyl bis(benzylidene)hydrazine, citric acid, N,N'-(disalicylidene)-1,2-propanediamine, ethylene-diaminetetraacetic acid (EDTA) and salts therof, mercaptobenzothiazoles, mercaptobenzimidazoles, thiadiazoles and triazoles and derivatives thereof.

The term *UV-absorber* in the context of the present invention relates to a compound or substance used as additives which absorbs UV light much stronger than the polymer they protect and have a high stability against UV-light themselves. The excited states of the UV-absorber quickly relaxes to the ground state without producing radiation.

The term *anti-polymerisation agent* in the context of the present invention relates to a compound or substance used as an additive which prevents or delays light-induced polymerisation, heat-induced polymerisation or autopolymerisation. The anti-polymerisation inhibitor functions as a radical scavenger.

The term *anti-corrosion agent* in the context of the present invention relates to a compound or substance used as an additive which prevents or decreases the corrosion rate of a material, usually a metal, through oxidation. Anti-corrosion agents comprising amines, oxygen is converted to water or other harmless substances. Anti-corrosion agents comprising sulphites form a coating on the surface protecting the surface from environmentally induced corrosion or deposit sulphite on surface which functions as a lubricant.

The term *hindered amine light stabilisers (HALS)* in the context of the present invention relates to a class of compounds with long-term protection against heat induced degradation and radical induced degradation as well as photo-oxidation of polymers. The mechanism of HALS is based on a complex set of free-radical scavenging reactions which starts with the oxidation of HALS to nitroxide radicals (RNO·) by reaction with peroxides or hydroperoxides, which subsequently react with polymeric alkyl radicals, yielding hydroxylamine ethers which can react with a variety of compounds. New RNO· radicals may be regenerated from the reaction of hydroxylamine ethers with alkylperoxy and acylperoxy radicals. The most widely used HALS are derivatives of 2,2,6,6-tetramethylpiperidine.

The term *dispersant* in the context of the present invention relates to a compound or substance used as an additive in a liquid to improve the separation of particles and prevent settling or clumping.

The term *amphiphilic compound* in the context of the present invention relates to a chemical compound with both hydrophilic and lipophilic properties. Examples include but are not limited to soap, detergents, phospholipids and lipoproteins.

The term *oxygenated hydrocarbons* in the context of the present invention relates to a chemical olefin solvent containing oxygen, including alcohols, ester, ether and ketones. Examples include but are not limited to methanol, ethanol, iso-propanol, acetone, methylethylketone, methyl isobutyl ketone, ethyl acetate and butyl acetate.

The term *anti-freezing agent* in the context of the present invention relates to a compound or substance used as an additive which lowers the freezing point or the gelation point of a liquid.

The term *plasticiser* in the context of the present invention relates to a compound or substance used as an additive which softens a material, usually a polymer based material, increases its plasticity and decrease its viscosity.

The term *elastomeric membrane* in the context of the present invention relates to a polymer membrane, wherein the polymer is viscoelastic, i.e. viscos and elastic, and has weak intermolecular forces.

The term *thermoplastic membrane* in the context of the present invention relates to a polymer membrane, wherein the polymer becomes deformable at elevated temperatures.

The term *buffer* in the context of the present invention relates to a compound or substance, particularly an aqueous solution containing partly neutralised weak acids or bases showing small changes in pH upon addition of other ions to the liquid.

### Detailed Description of the Invention

A first aspect of the invention relates to a liquid for an optical tuneable device, wherein the optical tuneable device comprises a volume and membrane and wherein the volume is filled with a liquid comprising
- at least one compound of formula (I), 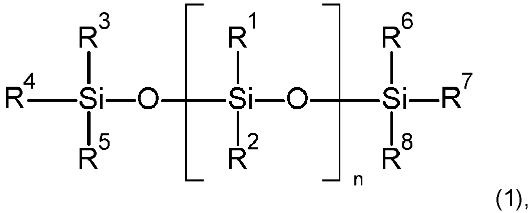 wherein
   each R1 is independently from any other R1 selected from Cx-alkyl-A, particularly each R¹ is selected from Cₓ-alkyl-A, with
      A being selected from -H, CN, phenyl, -(CH₂)-phenyl and CF₃, in particular -H and -CN, and
      x being an integer between 3 and 20,
      each R² is independently from any other R² selected from C_{y}-alkyl, C_{y}-alkyl-B, phenyl, -(CH₂)-phenyl, in particular from any other R² selected from -H, C_{y}-alkyl, phenyl, -(CH₂)-phenyl, with
      B being selected from CN, phenyl, -(CH₂)-phenyl and CF₃, in particular CF₃ and -CN
      y being an integer between 1 and 17, particularly between 1 and 6,
   R³, R⁴, R⁵, R⁶, R⁷ and R⁸ are independently selected from -H, C₁₋₄-alkyl, phenyl, and -(CH₂)-phenyl, particularly methyl,
   n is an integer between 1 and 50,
   the sum of x and y is ≤ 21,
   R¹, R², R³, R⁴, R⁵, R⁶, R⁷ and R⁸ are optionally substituted by one or more substituents -F,
      - at least one additive, particularly wherein the at least one additive is selected from the group of a protecting agent, a stabiliser, a tracer, a buffer and a surface tension adjustment agent,
   and wherein the membrane is selected from an elastomeric membrane or a thermoplastic membrane, in particular from a substituted PDMS or an unsubstituted PDMS membrane, a urethane membrane, an acryl membrane, a polyethylentherephthalate membrane, a polyethylene membrane, a cyclic olefin polymer or a cyclic olefin copolymer membrane, more particularly from a substituted PDMS or an unsubstituted PDMS membrane.

The unsubstituted PDMS or substituted PDMS is optically transparent.

The focus of the lens can be adjusted by changing the curvature of the membrane. This may for instance be achieved by using an actuator that presses a holding ring against the membrane, by means of a coil or by means of a ring-shaped piston that directly indents the membrane in order to deform it, or by using a wall that is designed to be adjustable in height with respect to the optical element.

In certain embodiments, liquid for an optical tuneable device, wherein the optical tuneable device comprises a volume and a membrane and wherein the volume is filled with a liquid comprising
- at least one compound of formula (I), 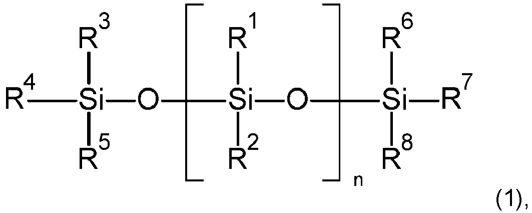 wherein
   each R1 is independently from any other R1 selected from Cx-alkyl-A, particularly each R¹ is selected from Cₓ-alkyl-A, with
      A being selected from -H, CN, phenyl, -(CH₂)-phenyl and CF₃, in particular -H and -CN, and
      x being an integer between 3 and 20,
      each R² is independently from any other R² selected from C_{y}-alkyl, C_{y}-alkyl-B, phenyl, -(CH₂)-phenyl, in particular from any other R² selected from -H, C_{y}-alkyl, phenyl, -(CH₂)-phenyl, with
      B being selected from CN, phenyl, -(CH₂)-phenyl and CF₃, in particular CF₃ and -CN
      y being an integer between 1 and 17, particularly between 1 and 6,
   R³, R⁴, R⁵, R⁶, R⁷ and R⁸ are independently selected from -H, C₁₋₄-alkyl, phenyl, and -(CH₂)-phenyl, particularly methyl,
   n is an integer between 1 and 50,
   the sum of x and y is ≤ 21,
   R¹, R², R³, R⁴, R⁵, R⁶, R⁷ and R⁸ are optionally substituted by one or more substituents -F,
      - at least one additive, particularly wherein the at least one additive is selected from the group of a protecting agent, a stabiliser, a tracer, and a surface tension adjustment agent,
   and wherein the membrane is selected from an elastomeric membrane or a thermoplastic membrane, in particular from a substituted PDMS or an unsubstituted PDMS membrane, a urethane membrane, an acryl membrane, a polyethylentherephthalate membrane, a polyethylene membrane, a cyclic olefin polymer or a cyclic olefin copolymer membrane, more particularly from a substituted PDMS or an unsubstituted PDMS membrane.

In certain embodiments, the PDMS or the substituted PDMS is purely elastic with low viscoelastic damping.

In certain embodiments, the PDMS can be at least partially functionalised by additional substituents such as phenyl or fluoride. The functionalisation can be chosen dependent on the applied liquid providing a particularly low solubility between the liquid and said PDMS.

In certain embodiments, the PDMS is unsubstituted PDMS.

In certain embodiments, the volume is filled with at least one compound of the formula 1 and comprises additives, in particularly additives to change the stability of materials such as inhibitors or absorbers.

In certain embodiments, the volume is filled with a liquid comprising at least one compound of the formula 1, and wherein R¹, R², R³, R⁴, R⁵, R⁶, R⁷ and R⁸ are chosen in such way to adjust the optical properties of the liquid.

Optical properties that can be adjusted include the refractive index, Abbe number, i.e. dispersion of a material, and light transmittance. By introducing a higher amount of phenyl substituents the refractive index can be increases, while introducing a higher amount of fluorine substituents decreases the refractive index. By using two or more compounds of formula 1, the refractive index can be adjusted through the ratio of volume of the two or more compounds.

In certain embodiments, the volume is filled with a liquid comprising one compound of the formula 1, and wherein R¹, R², R³, R⁴, R⁵, R⁶, R⁷ and R⁸ are chosen in such way to adjust the optical properties of the liquid.

In certain embodiments, the volume is filled with a mixture of two or more compounds of the formula 1.

This allows the adjustment of the optical properties such as refractive index or density. Liquids or materials with similar polarity or side chains with similar chemical properties are miscible, for example, silicone oils with different amounts of phenyl or fluorine substituents are miscible. By mixing such liquids or materials the refraction index can be adjusted according its needs. For example, a higher amount of phenyl substituents increases the refractive index, while an increasing amount of fluorine substituents decreases the refractive index of a liquid. Polyglycols and polyols are in turn miscible with esters in certain proportions to adjust the refraction index. In certain embodiments, the volume is filled with a mixture of two or more compounds of the formula 1 and comprises additives, in particularly additives to change the stability of materials such as inhibitors or absorbers.

In certain embodiments, the volume is filled by at least 50% with the compound(s) of formula 1.

In certain embodiments, the optical tuneable device comprises a device that is designed to adjust the curvature of the membrane.

In certain embodiments, the optical tuneable device comprises an actuator to adjust the curvature of the membrane.

In certain embodiments, the optical tuneable device comprises a ring, a coil or a piston that is designed to adjust the curvature of the membrane or a wall that is designed to be adjustable in height to adjust the curvature of the membrane.

The volume is filled with a silicone-based polymer (compound of formula 1). The polymer comprises 1 to 50 monomers that are characterized by side chains R¹ and R².

The side chains contribute to steric hindrance which limits penetration and transport of the compound of formula 1 through the membrane structure.

The polymer may be composed of different monomers having varying moieties at R¹ and/or R². An example may be polymer that is composed of a mix of monomers having an alkyl at R¹ and monomers having an alkyl-CN moiety at R¹. Also, variation at R² is possible within one polymer. For instance, in a polymer characterized by R¹ being an alkyl-CN moiety, the R² moiety may vary between methyl and -CH₂-phenyl.

The Cₓ- and C_{y}-alkyl moieties at R¹ and R², respectively, may be linear or branched alkyls.

In certain embodiments, each R¹ is identical to any other R¹.

In certain embodiments, each R² is identical to any other R².

In certain embodiments, each R¹ is identical to any other R¹ and each R² is identical to any other R².

The moieties R¹ to R⁸ may optionally be fluorinated. Particularly the steric effect of the polymer may be adjusted by full or partial F substitution. Thus, penetration and transport of the polymer through the membrane structure may be avoided. This is particularly important when the sum of x and y is rather small, e.g. the alkyl moiety at R¹ is in the range of C₃₋₇-alkyl.

In certain embodiments, the F-substitution is in the range of more than 40 %.

In certain embodiments, the moieties R³, R⁴, R⁵, R⁶, R⁷ and R⁸ are fully or partially, particularly fully substituted. This is particularly important when the sum of x and y is rather small, e.g. the alkyl moiety at R¹ is in the range of C₃₋₇-alkyl.

In embodiments with longer side chains at R¹ and R², the side chain is substituted, in particular with at least 40 %.

In embodiments with longer side chains at R¹ and R², the side chain is substituted, in particular with at least 40 %, and the moieties R³, R⁴, R⁵, R⁶, R⁷ and R⁸ are fully or partially, particularly fully substituted.

For application in an optical lens, the liquid (compound of formula 1) filled in the volume should be transparent.

In certain embodiments, the refractive index for the compound of formula 1 is between 1. 33 and 1.6, particularly between 1.44 and 1.47.

The viscosity of the compound of formula 1 correlates with the number n. Polymers consisting of many monomers are more viscous than polymers consisting of less monomers. The viscosity of the polymer affects how fast the focus of the optical tuneable device can be adjusted. For most applications, a viscosity equal to or below 100 000 cSt is suitable.

In certain embodiments, the viscosity of the compound of formula 1 is ≤ 100000 cSt, particularly 5-2000 cSt.

If A is -CN, the compound of formula 1 is polar. A polar structure has low solubility in a nonpolar environment and accordingly, when PDMS is used as elastic membrane element, the use of a polar liquid is suitable under the condition that the presence of water is controlled, for instance in a closed system.

In certain embodiments, x is an integer between 3 and 13 in case of A being -CN.

In certain embodiments, x is an integer between 3 and 6 in case of A being -CN.

In case of polar compounds of formula 1, the refractive index can be adjusted without significantly affecting swelling or other properties for application in optical devices by punctual substitution of the -CN moiety by other non-reactive moieties such as alkyls, trifluoroalkyls and phenyls, particularly phenyl, -(CH₂)-phenyl and CF₃ more particularly CF₃. The fraction of those substitutes might be in the range of up to 50 % to overall maintain the properties of the -CN moieties and maintain compatibility to elastomers such as PDMS.

In certain embodiments, A is -CN in at least 50 % of all R¹ in case of n ≥ 2.

In certain embodiments, A is -CN for all R¹.

If A is -H, the compound of formula 1 is hydrophobic. Hydrophobic properties of the liquid are a preferred for its use in open systems where water can diffuse in and out.

In certain embodiments, A is -H for all R¹.

In certain embodiments, x is an integer between 6 and 20, particularly between 9 and 20 in case of A being -H.

In case of hydrophobic compounds of formula 1, C₆₋₁₃, particularly C₉₋₁₃-alkyls may be used at R¹ to maintain a well-balanced set of properties. For a compound comprising short side chains at R¹ (e.g., x = 9), both, the viscosity and melting point are rather low but interesting for many applications, while the swelling of a membrane made of PDMS at higher temperatures around 85°C is getting relevant. On the other side, compounds comprising a rather large alkyl group at R¹ (x = 12 or 13), have a higher melting point, typically above 10 to 15°C, where its use can get limited. Nonetheless, compounds comprising a shorter or a longer alkyl chain are suitable for most standard applications.

In certain embodiments, x is an integer between 6 and 13, particularly between 9 and 13 in case of A being -H.

In certain embodiments, x is an integer between 9 and 12 in case of A being -H.

Also, in case of hydrophobic compounds of formula 1, the refractive index can be adjusted by partial substitution of R¹ and/or R². For instance, a methyl group at R² may be exchanged in some monomers by a phenyl or -(CH₂)-phenyl moiety.

In certain embodiments, the Cₓ-alkyl of the moiety Cₓ-alkyl-A is linear.

In certain embodiments, the Cₓ-alkyl of the moiety Cₓ-alkyl-A and the C_{y}-alkyl is linear.

Typically, the n number is in the range of 1 to 50. Within this range, basic compatibility and neglectable swelling of the elastic membrane material is achieved. Of note, the viscosity increases with increasing number of monomers n. For most applications, a low viscosity is preferred since it leads to a higher tuning speed of the adaptive element - especially at lower temperatures. Nevertheless, a high viscosity can be preferred when the dynamics of the optical is of less importance, but the robustness towards mechanical shocks, low vapour pressures, robustness against cavitation (with induced bubble formation) or comparable are preferred. A reasonable viscosity limit is 100000 cSt. Low n numbers, such as 1 to 5, may induce certain risks of vapour creation at low pressures inside of the optical device, combined with high temperatures and mechanical shocks; especially after rapid transfer from cold environment in a high-pressure gas atmosphere. Nevertheless, at low or very low temperatures, such low molecular weight type of liquids may be preferred. These extreme conditions (high/low temperatures; high/low pressures) are likely to be found in space applications, where tuneable optical devices such as focus tuneable lenses can significantly reduce the weight of optical systems.

In certain embodiments, n is an integer between 1 and 5.

For applications, e.g., in camera system, at ambient temperature (e.g., 15°C to 40°C, preferably -20 °C to 85 °C), polymers consisting of 11 to 29 monomers are particularly suitable.

In certain embodiments, n is an integer between 11 and 29.

For optical tuneable devices specifically used at high temperatures (e.g.,40° to 150 °C), the Standard Temperature and Pressure (STP) viscosity of the polymer should be high.

In certain embodiments, n is an integer between 30 and 50.

Suitable membranes are optically transparent, have low viscoelastic damping and show chemical and physical stability (including stable elasticity) over a very broad temperature range, i.e. at least from minus 40°C to 200°C.

In certain embodiments, the membrane is transparent and stable at a temperature between - 40 °C and +200 °C.

In certain embodiments, the sum of the at least one additive is smaller than 50%.

In certain embodiments, the sum of the at least one additive is smaller than 20%.

In certain embodiments, the sum of the at least one additive is smaller than 5%.

In certain embodiments, the protecting agent is selected from an antioxidant, a metal deactivator, a UV absorber, an anti-polymerisation agent and/or an anti-corrosion agent.

In certain embodiments, the protecting agent is selected from an antioxidant, a metal deactivator, a UV absorber, an anti-polymerisation agent and an anti-corrosion agent or a mixture therof.

The group of antioxidants, metal deactivators, UV absorbers, anti-polymerisation agents and anti-corrosion agents increase or improve the protection of the material from extrinsic influences.

In certain embodiments, the antioxidant is selected from butylated hydroxytoluene (BHT), pentaerythritol tetrakis[3-[3,5-di-tert-butyl-4-hydroxyphenyl]propionate, ethylene bis (oxyethylene) bis-(3-(5-tert-butyl-4-hydroxy-m-tolyl)-propionate), D-alpha-tocopherol acetate, L-alpha-tocopherol acetate, L(+)-ascorbic acid and/or bisphenol-A.

The alkyl chain of the monomer or polymer may be cleaved at higher temperatures leaving a reactive radical which induces unfavourable polymerization altering the viscosity of the liquid. This unfavourable polymerization is avoided through the addition of antioxidants which can function as radical scavengers.

The antioxidant can be added alone or as a mixture of various antioxidants.

In certain embodiments, the antioxidant is added from 2 % to 10 %.

In certain embodiments, the antioxidant is added from 0.5 % to 2 %.

In certain embodiments, the antioxidant is added at less than 0.5 %.

In certain embodiments, the anti-polymerisation agent is selected from Seigyozai-No.6-10, tetravinyltetramethylcyclotetrasiloxane, methylisobutynol, tert-butylhydroperoxide and/or (2,2,6,6-Tetramethylpiperidin-1-yl)oxyl (TEMPO).

The alkyl chain of the monomer or polymer may be cleaved at higher temperatures or through light, leaving a reactive radical which induces unfavourable polymerization altering the viscosity of the liquid. This unfavourable polymerization is avoided through the addition of anti-polymerisation agents prevent heat or light induced polymerization by acting as a radical scavenger. The reactive radical is inactivated by the radical scavenger.

The anti-polymerisation agent is added alone or as a mixture of various anti-polymerisation agents.

In certain embodiments, the anti-polymerisation agent is selected from tetravinyltetramethylcyclotetrasiloxane, methyl isobutynol, tert-butylhydroperoxide and/or (2,2,6,6-Tetramethylpiperidin-1-yl)oxyl (TEMPO).

In certain embodiments, the anti-polymerisation agent is added from 2 % to 10 %.

In certain embodiments, the anti-polymerisation agent is added from 0.5 % to 2 %.

In certain embodiments, the anti-polymerisation agent is added at less than 0.5 %.

In certain embodiments, the metal deactivator is selected from N,N'-bis(salicylidene)-1,2-propanediamine, benzotriazole, oxyalyl bis(benzylidene)hydrazine, N,N'-(disalicylidene)-1,2-propanediamine, ethylene-diaminetetraacetic acid (EDTA) and salts thereof, mercaptobenzothiazole, mercaptobenzimidazole, thiadiazole and/or triazole.

Surrounding metals can accelerate thermal oxidation of polymers. To prevent a metal-catalysed oxidation of the polymer, a metal deactivator forms an inactive complex with the catalytically active metal ion. The resulting complex is thermally stable. Thus, complexation of the metal with the chelating agent prevents metals from associating with hydro-peroxides, i.e., it decreases its ability to produce radicals from hydroperoxides by oxidation or reduction.

The mercaptobenzothiazole, mercaptobenzimidazole, thiadiazole and triazole may be substituted or unsubstituted.

The metal deactivator is added alone or as a mixture of various metal deactivators.

A metal deactivator may be combined with an antioxidant, if the metal deactivator does not comprise a radical scavenging moiety.

In certain embodiments, the metal deactivator is added from 2 % to 10 %.

In certain embodiments, the metal deactivator is added from 0.5 % to 2 %.

In certain embodiments, the metal deactivator is added at less than 0.5 %.

In certain embodiments, the UV-absorber is selected from benzophenone, triazine, benzotriazole and hindered amine light stabilisers (HALS).

UV-absorbers do absorb the destructive UV light much more strongly than the polymers they protect. The excited states of these compounds relax to the ground state very quickly and efficiently without producing radiation themselves and are thus of high UV stability. UV-absorbers prevent a UV light induced degradation of the polymer.

The UV-absorber is added alone or as a mixture of various UV-absorbers.

Benzophenone, triazine and benzotriazole may be substituted or unsubstituted.

Hindered amine light stabilisers (HALS) are derivatives of 2,2,6,6-tetramethyl-piperidine, which may or may not be additionally substituted at the 4 position.

In certain embodiments, the UV-absorber is added from 2 % to 10 %.

In certain embodiments, the UV-absorber is added from 0.5 % to 2 %.

In certain embodiments, the UV-absorber is added at less than 0.5 %.

In certain embodiments, the anti-corrosion agent is selected from zinc dithiophosphate, benzotriazole, hexamine, phenylendiamine, dimethylethanolamine, sulphites and/or ascorbic acid.

The anti-corrosion agent prevents or decreases the corrosion rate of the contacting metal by converting oxygen into water or by adding a protective layer onto the metal surface, depending on the anti-corrosion agent used.

The anti-corrosion agent is added alone or as a mixture of various anti-corrosion agents.

In certain embodiments, the anti-corrosion agent is a chromate or a nitrate.

In certain embodiments, the anti-corrosion agent is added from 2 % to 10 %.

In certain embodiments, the anti-corrosion agent is added from 0.5 % to 2 %.

In certain embodiments, the anti-corrosion agent is added at less than 0.5 %.

In certain embodiments, the stabiliser is selected from a dispersant, nanoparticles, an anti-freezing agent and/or a plasticizer.

The use of a stabiliser as an additive in the liquid enhances the polymer properties by optimising viscosity, optical density and polymer stabilisation.

The stabiliser is added alone or as a mixture of various stabilisers.

In certain embodiments, the dispersant is an amphiphilic compound.

The dispersant prevents clumping and settling of particles on the liquid.

The amphiphilic compound is added alone or as a mixture of various amphiphilic compounds.

In certain embodiments, the dispersant is added from 2 % to 10 %.

In certain embodiments, the dispersant is added from 0.5 % to 2 %.

In certain embodiments, the dispersant is added at less than 0.5 %.

In certain embodiments, the nanoparticles are selected from SiO₂, TiO₂, ZnO and/or BaTiO₃.

The use of nanoparticles as an additive to the liquid allows the adaption of the refractive index so that the ideal optical density can be generated.

The nanoparticles are added alone or as a mixture of various nanoparticles.

In certain embodiments, the nanoparticles are selected from SiOz and/or TiOz.

In certain embodiments, the nanoparticles are SiOz.

In certain embodiments, the nanoparticles is added from 10 % to 60 %.

In certain embodiments, the nanoparticles is added from 5 % to 10 %.

In certain embodiments, the nanoparticles is added at less than 5 %.

In certain embodiments, the anti-freezing agent is an oxygenated hydrocarbon.

An anti-freezing agent allows for an adaption of the viscosity of the liquid at lower temperatures. The liquids' viscosity would naturally decrease with lower temperature. Through the addition of an anti-freezing agent, the freezing point is depressed to a lower temperature and viscosity at lower temperature remains similar to the viscosity at room temperature.

The oxygenated hydrocarbon is added alone or as a mixture of various oxygenated hydrocarbons.

A combination of an anti-freezing agent with another additive would further enhance the liquids viscosity at lower temperatures.

In certain embodiments, the anti-freezing agent is added from 2 % to 10 %.

In certain embodiments, the anti-freezing agent is added from 0.5 % to 2 %.

In certain embodiments, the anti-freezing agent is added at less than 0.5 %.

In certain embodiments, the plasticiser is selected from di-n-hexyl-phthalate and/or bisphenol-A.

The addition of a plasticiser to the liquid increases its plasticity and decreases its viscosity so that the lense properties can be optimised, particularly in combination with other additives.

The plasticiser is added alone or as a mixture of different plasticisers.

In certain embodiments, the tracer is selected from fluorescent nanoparticles and/or quantum dots.

The tracer is added in specific and unique concentrations to allow easy detection of the produced optical device.

The tracer is added alone or as a mixture of different tracers.

In certain embodiments, the anti-freezing agent is added from 0.5 % to 1 %.

In certain embodiments, the anti-freezing agent is added from 0.01 % to 0.5 %.

In certain embodiments, the anti-freezing agent is added at less than 0.01 %.

In certain embodiments, the surface tension adjustment agent is selected from sodium dodecyl sulfate (SDS), sodium lauryl sulfate (SLS), polyethylenglykolsorbitanmonolaurat, polyethylenglycolsorbitanmonooleat and/or sorbitanmonooleat.

The surface tension adjustment agent adjusts the surface tension of the liquid in the tuneable optical device allowing for an enhanced coverage of the surface covered by the liquid and for minimalization in adhesion of the liquid to the surface it is covering allowing full operation of the tuneable optical device.

The surface tension adjustment agent is added alone or as a mixture of various surface tension adjustment agents.

In certain embodiments, the surface tension adjustment is added from 2 % to 10 %.

In certain embodiments, the surface tension adjustment is added from 0.5 % to 2 %.

In certain embodiments, the surface tension adjustment is added at less than 0.5 %.

In certain embodiments, the buffer is selected from phosphate buffer, tris(hydroxymethyl)aminomethane buffer, borate buffer, citrate buffer, glycine buffer, diethanolamine, acetic acid - sodium acetate, ammonia and ammonium chloride.

The buffer protects the liquid from decomposition induced by external agents contaminating the liquid and impacting the pH value of the liquid, by stabilising the pH of the liquid.

### Description of the Figures

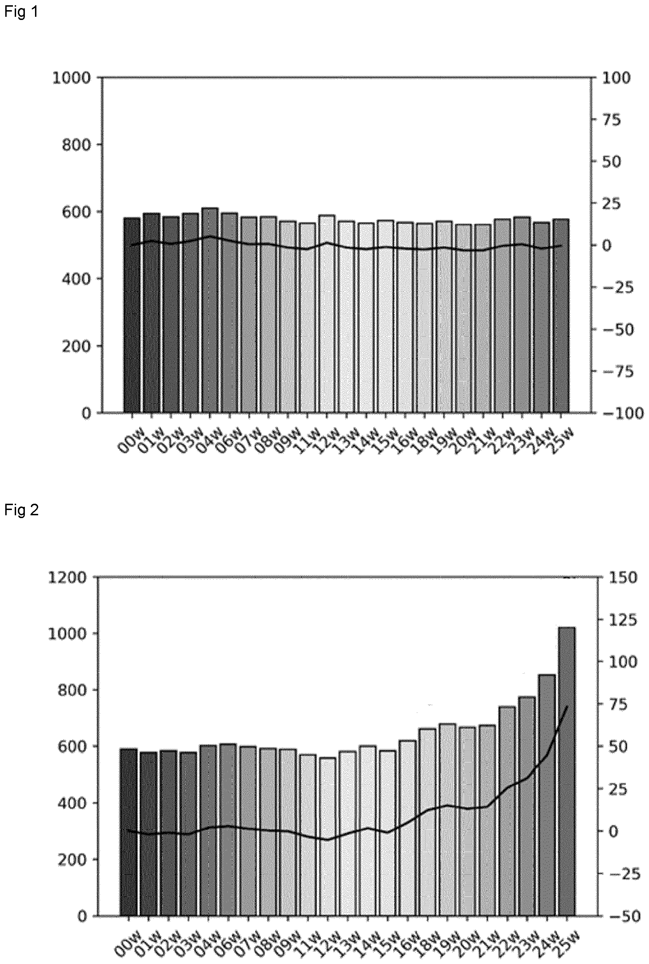

- Fig 1: shows the viscosity at 85°C over time with the addition of 0.1 % antioxidant. X-axis: time [weeks]; Left Y-axis: Viscosity [mPa x s]; Right Y-axis: Percentage increase [%].
- Fig 2: shows the viscosity at 85°C over time with the addition of 0.05 % antioxidant. X-axis: time [weeks]; Left Y-axis: Viscosity [mPa x s]; Right Y-axis: Percentage increase [%].

### Cited prior art documents:

1. Priority application DE 10 2022 121 080.4

## Claims

1. A liquid for an optical tuneable device, wherein the optical tuneable device comprises a volume and a membrane and wherein the volume is filled with a liquid comprising
• at least one compound of formula (I), 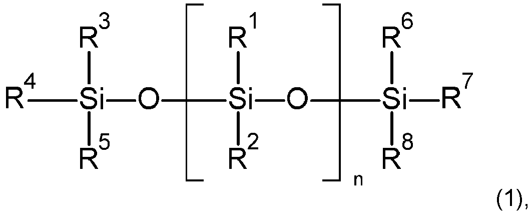 wherein
each R¹ is independently from any other R¹ selected from Cₓ-alkyl-A, particularly each R¹ is selected from Cₓ-alkyl-A, with
A being selected from -H, CN, phenyl, -(CH₂)-phenyl and CF₃, in particular -H and -CN, and
x being an integer between 3 and 20,
each R² is independently from any other R² selected from C_{y}-alkyl, C_{y}-alkyl-B, phenyl, -(CH₂)-phenyl, in particular from any other R² selected from -H, C_{y}-alkyl, phenyl, -(CH₂)-phenyl, with
B being selected from CN, phenyl, -(CH₂)-phenyl and CF₃, in particular CF₃ and -CN
y being an integer between 1 and 17, particularly between 1 and 6,
R³, R⁴, R⁵, R⁶, R⁷ and R⁸ are independently selected from -H, C₁₋₄-alkyl, phenyl, and-(CH₂)-phenyl, particularly methyl,
n is an integer between 1 and 50,
the sum of x and y is ≤ 21,
R¹, R², R³, R⁴, R⁵, R⁶, R⁷ and R⁸ are optionally substituted by one or more substituents -F,
• at least one additive, particularly wherein the at least one additive is selected from the group of a protecting agent, a stabiliser, a tracer, a buffer and/or a surface tension adjustment agent, and wherein the membrane is selected from an elastomeric membrane or a thermoplastic membrane, in particular from a substituted PDMS or an unsubstituted PDMS membrane, a urethane membrane, an acryl membrane, a polyethylentherephthalate membrane, a polyethylene membrane, a cyclic olefin polymer or a cyclic olefin copolymer membrane, more particularly from a substituted PDMS or an unsubstituted PDMS membrane.

2. The liquid for an optical tuneable device according to claim 1, wherein the sum of the at least one additive is smaller than 50 %, particularly smaller than 20 %, more particularly smaller than 5 %.

3. The liquid for an optical tuneable device according to any of the preceding claims, wherein the volume is filled with a liquid comprising at least one compound of formula 1, and wherein R¹, R², R³, R⁴, R⁵, R⁶, R⁷ and R⁸ are chosen in such way to adjust the optical properties of the liquid.

4. The liquid for an optical tuneable device according to claim 1, wherein the protecting agent is selected from an antioxidant, a metal deactivator, a UV absorber, an anti-polymerisation agent and an anti-corrosion agent.

5. The liquid for an optical tuneable device according to any of the preceding claims, wherein the antioxidant is selected from butylated hydroxytoluene (BHT), pentaerythritol tetrakis[3-[3,5-di-tert-butyl-4-hydroxyphenyl]propionate, ethylene bis (oxyethylene) bis-(3-(5-tert-butyl-4-hydroxy-m-tolyl)-propionate), D-alpha-tocopherol acetate, L-alpha-tocopherol acetate, L(+)-ascorbic acid and/or bisphenol-A.

6. The liquid for an optical tuneable device according to any of the preceding claims, wherein the anti-polymerisation agent is selected from tetravinyltetramethylcyclotetrasiloxane, methyl isobutynol, tert-butylhydroperoxide and/or (2,2,6,6-Tetramethylpiperidin-1-yl)oxyl (TEMPO).

7. The liquid for an optical tuneable device according to any of the preceding claims, wherein the metal deactivator is selected from benzotriazole, oxyalyl bis(benzylidene)hydrazine, N,N'-(disalicylidene)-1,2-propanediamine, ethylene-diaminetetraacetic acid (EDTA) and salts thereof, mercaptobenzothiazole, mercaptobenzimidazole, thiadiazole and/or triazole.

8. The liquid for an optical tuneable device according to any of the preceding claims, wherein the UV-absorber is selected from benzophenone, hydroxybenzophenone, triazine, (2-hydroxyphenyl)-s-triazine, benzotriazole, 2-(2H-Benzotriazol-2-yl)-4,6-bis(2-phenyl-2-propanyl)phenol, 2-(2H-Benzotriazol-2-yl)-4,6-di-tert-butylphenol and/or hindered amine light stabilisers (HALS).

9. The liquid for an optical tuneable device according to any of the preceding claims, wherein the anti-corrosion agent is selected from zinc dithiophosphate, benzotriazole, hexamine, phenylendiamine, dimethylethanolamine, sulphites and/or ascorbic acid.

10. The liquid for an optical tuneable device according to claim 1, wherein the stabiliser is selected from a dispersant, nanoparticles, an anti-freezing agent, and/or a plasticiser.

11. The liquid for an optical tuneable device according to claim 10, wherein the dispersant is an amphiphilic compound.

12. The liquid for an optical tuneable device according to claim 10, wherein the nanoparticles are selected from SiO₂,TiO_{2,},ZnO and/or BaTiO₃, particularly SiOz and/or TiO₂, more particularly, SiOz.

13. The liquid for an optical tuneable device according to claim 10, wherein the anti-freezing agent is an oxygenated hydrocarbon.

14. The liquid for an optical tuneable device according to claim 10, wherein the plasticiser is selected from di-n-hexyl-phthalate and/or bisphenol-A.

15. The liquid for an optical tuneable device according to claim 1, wherein the tracer is selected from fluorescent nanoparticles and/or quantum dots.

16. The liquid for an optical tuneable device according to claim 1, wherein the surface tension adjustment agent is selected from sodium dodecyl sulfate (SDS), sodium lauryl sulfate (SLS), polyethylenglykolsorbitanmonolaurat, polyethylenglycolsorbitanmonooleatand/or sorbitanmonooleat.

17. The liquid for an optical tuneable device according to claim 1, wherein the buffer is selected from phosphate buffer, tris(hydroxymethyl)aminomethane buffer, borate buffer, citrate buffer, glycine buffer, diethanolamine, acetic acid - sodium acetate, ammonia and ammonium chloride.
